# EUROPÄISCHE PATENTSCHRIFT

(11) **EP 1 053 514 B1**
(45) Veröffentlichungstag und Bekanntmachung des Hinweises auf die Patenterteilung: **08.01.2003**
(21) Anmeldenummer: 99906206.0
(22) Anmeldetag: 27.01.1999
(51) Int. Cl.: G05B 19/401, G05B 19/4065, B24B 9/14

(54) **VERFAHREN UND VORRICHTUNG ZUM HERSTELLEN EINER FACETTE AUF DEM RAND EINES BRILLENGLASES**
METHOD AND DEVICE FOR FORMING A BEVEL ON THE EDGE OF A GLASS LENS
PROCEDE ET DISPOSITIF POUR REALISER UNE FACETTE SUR LE BORD D'UN VERRE DE LUNETTES

(30) Priorität: 05.02.1998 DE 19804455
(43) Veröffentlichungstag der Anmeldung: 22.11.2000
(73) Patentinhaber: Wernicke & Co. GmbH, 40231 Düsseldorf (DE)
(72) Erfinder: GOTTSCHALD, Lutz, D-40670 Meerbusch (DE)
(74) Vertreter: Rehders, Jochen
(86) Internationale Anmeldenummer: EP9900511
(87) Internationale Veröffentlichungsnummer: WO99040494

(56) Entgegenhaltungen:
- WO-A-93/23820
- US-A- 5 255 199
- US-A- 5 660 578

## Beschreibung

Die Erfindung betrifft ein Verfahren zum Herstellen einer Facette auf dem Rand eines Brillenglases mittels einer CNC-gesteuerten Brillenglasrandbearbeitungsmaschine.

In der EP 0 706 439 B1 derselben Anmelderin sind ein Verfahren und eine Vorrichtung beschrieben, mit denen sich Veränderungen der Facette aufgrund der Abnutzung einer zum Herstellen der Facette benutzten Schleifscheibe berücksichtigen lassen.

Beim Schleifen einer Facette an Brillengläsern ergibt sich eine Abnutzung der Schleifscheibe in der Facettennut, die nicht nur zu einer langsamen Vergrößerung der fertiggeschliffenen Brillengläser führt, sondern auch zu einer Vergrößerung des Winkels der Facette, d. h. zu einer Abflachung. Die Abflachung der Facette läßt sich bis zu einem gewissen Grad hinnehmen, solange das Brillenglas sicher in der Facettennut des betreffenden Brillengestells aufgenommen wird. Um dies zu erreichen, wird gemäß der EP 0 706 439 B1 vorgeschlagen, das umfangskonturgeschliffene Brillenglas einem Korrekturschliff zu unterziehen, der die Abflachung der Facette berücksichtigt. Zu diesem Zweck weist die Brillenglasrandbearbeitungsmaschine benachbart zur Schleifscheibe ein Auflager mit einer Keilnut auf, deren Keilwinkel einem zulässigen, maximalen Winkel einer Facette am Brillenglas entspricht. Wird das formgeschliffene und mit einer Facette versehene Brillenglas in die Keilnut eingesetzt, so ergibt sich solange ein ausschließlich von der radialen Abnutzung der Schleifscheibe abhängiger Meßwert, solange der Winkel der Facette des formgeschliffenen Brillenglases den Winkel der Keilnut am Auflager nicht überschreitet.

Bis Winkelgleichheit erreicht ist, genügt es, einen Korrekturschliff vorzunehmen, der der linearen Radiusabweichung entspricht. Ist die Abnutzung der für den Facettenschliff benutzten Schleifscheibe so groß, daß der Winkel der Dachfacette größer ist als der Winkel der Keilnut am Auflager, kann das zu vermessende Brillenglas mit seiner Dachfacette nicht mehr vollständig in die Keilnut eintauchen, so daß eine größere Abweichung gemessen wird, als der linearen Durchmesserveränderung der Schleifscheibe entspricht. In diesem Fall kann die Brillenglasrandbearbeitungsmaschine den Schleifvorgang beenden und ein Signal abgeben, das dem Betreiber einen Hinweis gibt, daß die Schleifscheibe abgerichtet werden muß bzw. unbrauchbar geworden ist.

Um festzustellen, ob der Winkel der Facette am formgeschliffenen Brillenglas einen vorbestimmten Wert überschritten hat, weist das Auflager zusätzlich zur Keilnut einen flachen Bereich auf und es wird wenigstens ein Radiuswert der Spitze der Facette in der Keilnut und ein weiterer Radiuswert mit Bezug auf den flachen Bereich aufgenommen. Aus der Differenz dieser Werte im Vergleich zu einem Soll-Wert läßt sich dann ermitteln, ob die Veränderung noch innerhalb zulässiger Grenzen liegt oder nicht.

Das aus der EP 0 706 439 B1 bekannte Verfahren und die Vorrichtung haben sich bewährt, erfordern jedoch einen zusätzlichen Korrekturschliff, wenn sich eine korrekturbedürftige Veränderung der Facettennut oder des Schleifscheibendurchmessers ergibt. Auch läßt sich erst dann feststellen, daß die Schleifscheibe abgerichtet werden muß bzw. unbrauchbar geworden ist, wenn ein bereits formgeschliffenes Brillenglas auf dem Auflager vermessen wird. Des weiteren wird bei dem bekannten Verfahren und der Vorrichtung die Querschnittsform der Facettennut im Brillengestell, für die das formzuschleifende Brillenglas bestimmt ist, bei dieser Prüfung nicht berücksichtigt.

Der Erfindung liegt daher das Problem zugrunde, ein Verfahren und eine Vorrichtung zum Herstellen einer Facette auf dem Rand eines Brillenglases zu schaffen, mit denen die Abnutzung einer Facettennut in einem Brillenglasrandbearbeitungswerkzeug überprüft wird, bevor die Brillenglasbearbeitung durchgeführt wird und mit denen es auch möglich ist, die Form der Facettennut in einem ausgewählten Brillengestell zu berücksichtigen.

Ausgehend von dieser Problemstellung wird ein Verfahren zum Herstellen einer Facette auf dem Rand eines Brillenglases mittels einer CNC-gesteuerten Brillenglasrandbearbeitungsmaschine vorgeschlagen, das erfindungsgemäß die Schritte: Abtasten der Facettennut einer Brillenglasöffnung in einem ausgewählten Brillengestell einschließlich der Querschnittsform der Facettennut und des Umfangs, Eingeben der ermittelten Werte in eine Steuereinrichtung der Brillenglasrandbearbeitungsmaschine, Abtasten des Brillenglasrandbearbeitungswerkzeugs hinsichtlich seines Durchmessers und der Form, seiner Facettennut, Eingeben der ermittelten Werte in die Steuereinrichtung der Brillenglasrandbearbeitungsmaschine, Vergleichen der Werte der Querschnittsform der Facettennut des Brillengestells mit den Werten der Querschnittsform der Facettennut des Brillenglasrandbearbeitungswerkzeugs, Durchführen der Facettenbearbeitung mit den ermittelten Werten, wenn die verglichenen Werte der Querschnittsform und der Durchmesser des Brillenglasrandbearbeitungswerkzeuges innerhalb eines vorgebbaren ersten Toleranzbereichs liegen, Durchführen der Facettenbearbeitung mit einem Korrekturwert, wenn die verglichenen Werte der Querschnittsform innerhalb eines zweiten Toleranzbereichs liegen und/oder der Durchmesser des Brillenglasrandbearbeitungswerkzeuges kleiner als ein vorgebbarer Mindestwert ist, Abbrechen der Facettenbearbeitung, wenn die verglichenen Werte außerhalb des ersten und des zweiten Toleranzbereichs liegen, umfaßt.

Die Erfindung geht von der Überlegung aus, daß einerseits die Facettennuten im Brillengestell hinsichtlich ihrer Querschnittsform innerhalb eines Toleranzbereichs liegen, wobei die Querschnittsform der Facettennut durch die Tiefe der Facettennut und den von den Flanken der Facettennut eingeschlossenen Winkel bestimmt wird. Sowohl die Tiefe der Facettennut als auch der Flankenwinkel sowie der Durchmesser des Brillenglasrandbearbeitungswerkzeugs können sich innerhalb eines zulässigen Toleranzbereichs bewegen.

Andererseits weist ein neues, unbenutztes Brillenglasrandbearbeitungswerkzeug eine Facettennut auf, die sehr genau mit engen Toleranzen herstellbar ist. Beim Schleifen der Facette eines Brillenglases ergibt sich jedoch eine Abnutzung des Brillenglasrandbearbeitungswerkzeugs hinsichtlich seines Durchmessers und der Querschnittsform der Facettennut, die nicht nur zu einer Vergrößerung des fertiggeschliffenen Brillenglases, sondern auch zu einer Vergrößerung des Winkels der Facette, d. h. zu einer Abflachung, führt.

Wird nun ein Vergleich zwischen dem Ist-Zustand der Facettennut im Brillengestell und dem der Facettennut im Brillenglasrandbearbeitungswerkzeug durchgeführt, läßt sich in vielen Fällen das Brillenglasrandbearbeitungswerkzeug trotz einer festgestellten Abnutzung der Facettennut ggf. nach Vornahme einer Korrektur beim Herstellen der Facette noch weiter verwenden, wenn die Querschnittsform der Facettennut im Brillengestell dies zuläßt. Eine Durchmesserverkleinerung des Brillenglasrandbearbeitungswerkzeugs läßt sich in diesem Fall durch eine Korrekturzustellung des Brillenglases mit Bezug auf das Brillenglasrandbearbeitungswerkzeug berücksichtigen.

Da das Abtasten der Facettennuten im Brillengestell und in dem Brillenglasrandbearbeitungswerkzeug durchgeführt wird, bevor das Brillenglas formbearbeitet und mit einer Facette versehen wird, sind keine zusätzlichen Korrekturarbeitsgänge erforderlich, vielmehr wird eine etwaig erforderliche Korrektur rechnerisch in den Datensatz zum CNC-gesteuerten Brillenglasrandbearbeiten einbezogen, so daß die Brillenglasrandbearbeitung direkt ein für das ausgewählte Brillengestell geeignetes, formgeschliffenes und mit einer Facette versehenes Brillenglas liefert.

Vorzugsweise können das Abtasten der Facettennuten im Brillengestell und in dem Brillenglasrandbearbeitungswerkzeug berührungslos mittels Video-Scanner-Systemen durchgeführt und die Querschnittsform der Facettennut auf einem Bildschirm abgebildet werden. Eine Vorrichtung zum berührungslosen Abtasten der Facettennuten in Brillengestellen mittels eines Video-Scanner-Systems ist in der DE 40 19 866 A1 derselben Anmelderin beschrieben. Laser-Scanner-Systeme sind jedoch auch geeignet.

Der erste Toleranzbereich, der das Durchführen der Facettenbearbeitung mit den ermittelten Werten ohne Einbeziehung eines Korrekturwerts zuläßt, kann einen Winkelbereich der Facettennut des Brillengestells umfassen, der gleich oder größer als der Winkelbereich der Facettennut des Brillenglasrandbearbeitungswerkzeugs ist, einen Tiefenbereich der Facettennut des Brillengestells umfassen, der gleich oder kleiner als der Tiefenbereich der Facettennut des Brillenglasrandbearbeitungswerkzeugs ist und einen Durchmesserbereich des Brillenglasrandbearbeitungswerkzeugs umfassen, der gleich oder kleiner als der Solldurchmesser des Brillenglasrandbearbeitungswerkzeugs ist.

Der zweite Toleranzbereich, der das Durchführen der Facettenbearbeitung mit Einbeziehung eines Korrekturwerts zuläßt, kann einen Winkelbereich der Facettennut des Brillengestells umfassen, der kleiner oder gleich dem Winkelbereich der Facettennut des Brillenglasrandbearbeitungswerkzeugs ist, wobei der Größtwert des Winkels der Facettennut des Brillenglasrandbearbeitungswerkzeugs einen vorgebbaren Wert nicht überschreiten darf und der Korrekturwert aus der sich aus den Ist-Winkeln der Facettennut des Brillengestells und des Brillenglasrandbearbeitungswerkzeugs errechenbaren Eindringtiefe der Facette am formgeschliffenen Brillenglas in die Facettennut des Brillengestells in der Weise bestimmt wird, daß das Brillenglas um einen Radialwert kleiner bearbeitet wird, der dem Abstand zwischen der Facettenspitze am Brillenglas und dem Grund der Facettennut des Brillengestells entspricht. Ein weiterer Korrekturwert kann, falls erforderlich, aus der Durchmesserverminderung des Brillenglasrandbearbeitungswerkzeugs ermittelt werden.

Wenn die verglichenen Werte außerhalb des ersten und des zweiten Toleranzbereichs liegen, wird die Facettenbearbeitung abgebrochen und zwar, wenn sich ergibt, daß der Winkel und die Tiefe der Facettennut des Brillengestells größer als der Winkel und die Tiefe der Facettennut des Brillenglasrandbearbeitungswerkzeugs sind oder wenn der Winkel der Facettennut des Brillenglasrandbearbeitungswerkzeugs größer als ein vorgebbarer Größtwert ist.

Eine zur Lösung des eingangs erwähnten Problems geeignete Brillenglasrandbearbeitungsmaschine kann wenigstens ein Brillenglasrandbearbeitungswerkzeug mit einer Facettennut, eine drehbare, relativ zum Brillenglasrandbearbeitungswerkzeug wenigstens radial verstellbare Brillenglashaltewelle, eine die Brillenglasrandbearbeitungsmaschine steuernde Steuereinrichtung, eine mit der Steuereinrichtung verbundene Vorrichtung zum Abtasten der Facettennut des Brillenglasrandbearbeitungswerkzeugs hinsichtlich Durchmesser und Querschnittsform und Umfangs, eine mit der Steuereinrichtung verbundene Vorrichtung zum Abtasten der Facettennut einer Brillenglasöffnung in einem ausgewählten Brillengestell einschließlich der Querschnittsform, eine Vergleichseinrichtung in der Steuereinrichtung zum Vergleichen der Werte der Querschnittsform der Facettennut des Brillengestells mit den Werten der Querschnittsform der Facettennut des Brillenglasrandbearbeitungswerkzeugs und eine Einrichtung zum Steuern des Durchführens der Facetten mit den ermittelten Werten, wenn die verglichenen Werte der Querschnittsformen und des Durchmessers des Brillenglasrandbearbeitungswerkzeugs innerhalb eines vorgebbaren ersten Toleranzbereichs, des Durchführens der Facettenbearbeitung mit einem Korrekturwert, wenn die verglichenen Werte der Querschnittsformen innerhalb eines zweiten Toleranzbereichs liegen und/oder der Durchmesser des Brillenglasrandbearbeitungswerkzeugs kleiner als ein vorgebbarer Mindestwert ist, des Abbrechens der Facettenbearbeitung, wenn die verglichenen Werte außerhalb beider Toleranzbereiche liegen, aufweist.

Die Vorrichtungen zum Abtasten der Facettennut im Brillenglasrandbearbeitungswerkzeug und im Brillengestell können vorzugsweise aus berührungslosen Video-Scanner-Systemen bestehen, die besonders bevorzugt CCD-Kameras umfassen.

Diese CCD-Kameras liefern über ein Bildauswertesystem in der Steuereinrichtung digitalisierte Daten, mit Hilfe derer sich der Vergleich der Facettennuten des Brillengestells und des Brillenglasrandbearbeitungswerkzeugs rechnergesteuert durchführen läßt und die ein Abbilden der Facettennut des Brillenglasrandbearbeitungswerkzeugs und des Brillengestells auf einem Bildschirm ermöglichen.

Laser-Scanner-Systeme sind jedoch ebenfalls geeignet.

Mit Hilfe des Bildauswertesystems und einem entsprechenden Rechnerprogramm in der Steuereinrichtung lassen sich des weiteren auf dem Bildschirm die Facettennut des Brillengestells und darin eingefügt, eine Facette eines Brillenglases entsprechend der Facettennut des Brillenglasrandbearbeitungswerkzeugs abbilden, so daß auf dem Bildschirm direkt erkennbar ist, ob sich die Facettenbearbeitung ohne Einfügen eines Korrekturwerts, mit einem Korrekturwert oder gar nicht durchführen läßt.

Diese Darstellung dient allerdings nur zur Information der Bedienungsperson, da die Facettenbearbeitung entsprechend den vorerwähnten Kriterien mittels der Steuereinrichtung vollautomatisch gesteuert durchgeführt wird.

Die Erfindung wird nachstehend anhand eines in der Zeichnung dargestellten Ausführungsbeispiels des näheren erläutert. In der Zeichnung zeigen:
- Fig. 1: eine perspektivische Ansicht einer erfindungsgemäßen Brillenglasrandbearbeitungsmaschine,
- Fig. 2: einen Querschnitt durch die Brillenglasrandschleifmaschine gemäß Fig. 1,
- Fig. 3: eine schematische Darstellung einer Abtastvorrichtung einer Facettennut eines Brillengestells,
- Fig. 4: eine vergrößerte Darstellung unterschiedlicher Facettennutformen in einem Brillenglasrandbearbeitungswerkzeug,
- Fig. 5: einen Querschnitt durch ein Brillengestell mit Darstellung unterschiedlicher Facettennutformen,
- Fig. 6 bis 9: eine Darstellung des Einpassens eines formgeschliffenen Brillenglases mit angebrachter Facette in eine Brillenglasöffnung eines Brillengestells mit unterschiedlicher Ausbildung der Facettennut im Brillengestell und der Facette am Brillenglas in Abhängigkeit von der Abnutzung des Brillenglasrandbearbeitungswerkzeugs.

Von einer an sich bekannten, CNC-gesteuerten Brillenglasrandschleifmaschine ist ein Gehäuse 1 dargestellt, in deren Schleifkammer 2 drei Schleifscheiben 3 an einer Welle 4 angeordnet sind. Eine der Schleifscheiben 3 mit zylindrischer Oberfläche dienen zum Vorschleifen der Umrißgestalt eines Brillenglases 9, während die beiden anderen Schleifscheiben zum Anschleifen unterschiedlicher Dachfacetten an das vorgeschliffene Brillenglas 9 dienen. An einer Schleifscheibe ist die Facette mit der Bezugsziffer 11 gekennzeichnet.

Parallel zur Welle 4 mit den Schleifscheiben 3 ist eine Brillenglashaltewelle aus koaxialen, drehbaren Halbwellen 5, 6 angeordnet, wovon die Halbwelle 6 axial verschiebbar ist. Die Halbwellen 5, 6 weisen an ihren Enden ringförmige Halteköpfe 8 auf, zwischen denen sich ein Rohglas 9 einklemmen läßt. Das Einklemmen kann automatisch oder über eine Handhabe 7 erfolgen.

Das Schleifen des Umfangsrandes entsprechend einer vorgegebenen Form des Brillenglases erfolgt in bekannter Weise CNC-gesteuert mittels einer Steuereinrichtung 12. Die Steuereinrichtung 12 steht mit einer Eingabevorrichtung in Form.einer Tastatur 14 in Verbindung, mittels derer sich die vorgegebene Umrißgestalt, die Dezentrationswerte und, falls gegeben, die Achsenlage eines zylindrischen oder prismatischen Schliffs eingeben lassen.

In der Schleifkammer 2 ist eine CCD-Kamera 10 angeordnet, die über einen Wandler 13 mit der Steuereinrichtung 12 verbunden ist. Diese CCD-Kamera nimmt ein Bild der Facettennut 11 in einer der Schleifscheiben 3 auf, wobei dieses Bild mittels eines Bildverarbeitungssystems digitalisiert und in einem Rechner der Steuereinrichtung 12 verarbeitet wird.

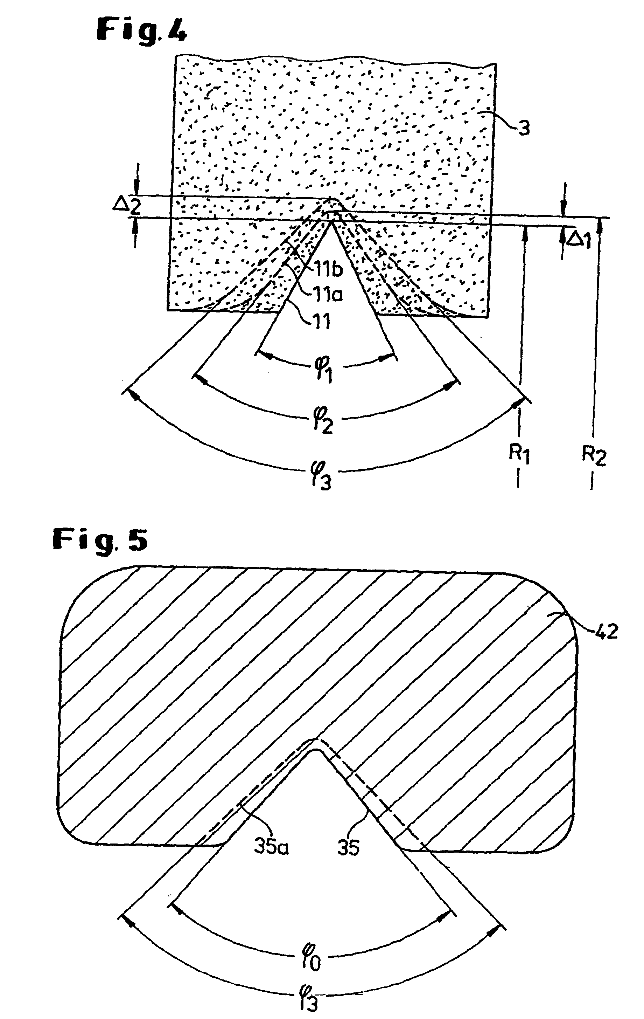

Auf einem Bildschirm 15 lassen sich die über die Tastatur 14 eingegebenen Werte und die von der CCD-Kamera 10 aufgenommene Facettennut 11 abbilden. Dies wird im einzelnen mit Bezug auf die Fig. 4 bis 9 erläutert.

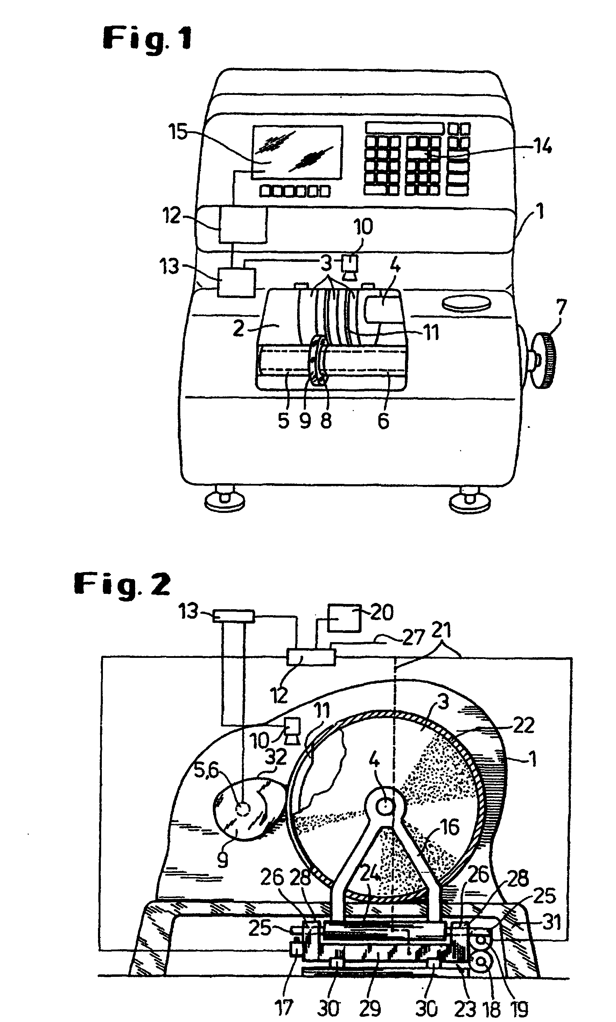

Unter Bezugnahme auf Fig. 2 ergibt sich, daß an einem Maschinengestell 31 ein Kreuzschlitten 23 angeordnet ist, dessen Schlittenteil 24 Führungsstangen 25 aufweist, die in Bohrungen 26 von Ansätzen 28 eines Schlittenteils 29 radial zur Brillenglashaltewelle 5, 6 mit einem davon gehaltenen Brillenglas 9 verschiebbar gelagert sind. Das Schlittenteil 29 ist über Führungsschienen 30 am Maschinengestell 31 in einer Richtung parallel zur Brillenglashaltewelle 5, 6 und der Welle 4 für die Schleifscheiben 3 verschiebbar angeordnet.

Die Welle 4 ist mittels Lagerstützen 16 am Schlittenteil 24 gelagert. Die Schleifscheiben 3 und das Brillenglas 9 mit ihren Wellen 4; 5, 6 sind von dem Gehäuse 1 umgeben, das unten eine im einzelnen nicht dargestellte Wanne aufweist, die verhindert, daß Kühlflüssigkeit und Schleifabrieb in den Bereich des Kreuzschlittens 23 gelangt.

Mit der Brillenglashaltewelle 5, 6 ist ein im einzelnen nicht dargestellter Winkelgeber verbunden, der mit einem Rechner in der Steuereinrichtung 12 über den Wandler 13 in Verbindung steht.

Ein Weggeber 17 ist am Schlittenteil 29 angeordnet und nimmt die Radialverschiebung des Schlittenteils 24 bezüglich der Brillenglashaltewelle 5, 6 auf. Dieser Weggeber 17 ist ebenfalls mit dem Rechner in der Steuereinrichtung 12 verbunden.

Die Radialverschiebung des Schlittenteils 24 wird durch einen von der Steuereinrichtung 12 über Steuerleitungen 21 angesteuerten Antriebsmotor 18 bewirkt, der mit den Führungsstangen 25 über eine elektromagnetische Kupplung 19 in Antriebsverbindung steht.

In einem Datenspeicher 20 lassen sich Datensätze für die Umfangskonturen der verschiedensten Brillenglasformen, Soll-Werte und Toleranzen für die Facettennut 11 in der Schleifscheibe 3 und anderer Daten speichern.

Ein die Schleifscheiben 3 eng umgreifender Spritzschutz 22, der nur im Berührungsbereich mit dem Brillenglas 9 offen ist, sorgt dafür, daß Kühlflüssigkeit, die in dem Berührungsbereich zwischen der Schleifscheibe 3 und dem Brillenglas 9 zugeführt wird, sowie Schleifabrieb nicht so in der Schleifkammer 2 herumgewirbelt werden, daß die Funktion der CCD-Kamera beeinträchtigt wird. Das Objektiv der CCD-Kamera 10 kann zusätzlich mit einer sich automatisch öffnenden und schließenden Verschlußklappe versehen sein, die sich nur öffnet, wenn kein Schleifvorgang abläuft.

Während die CCD-Kamera 10 dazu dient, ein Bild der Facettennut 11 in einer der Schleifscheiben 3 in rechnerverwertbarer Form aufzunehmen, ist des weiteren ein in Fig. 3 schematisch dargestelltes Video-Scanner-Systems vorgesehen, um eine Facettennut 35 in einer Brillengestellöffnung 34 eines Brillengestells 42 abzutasten. Auf einem im einzelnen nicht dargestellten Träger 33 liegt das Brillengestell 42 auf und wird mittels nicht dargestellter Klemmvorrichtungen gehalten. Eine Halterung 36 ist um eine durch den geometrischen Mittelpunkt der Brillengestellöffnung 34 verlaufende Drehachse A drehbar und weist oberhalb des Brillengestells 42 einen Arm auf, der mit einer Bogenführung 37 versehen ist, deren Mittelpunkt 44 auf der Drehachse A in der Ebene der Brillengestellöffnung 34 liegt. Ein Video-Scanner-System 39, das vorzugsweise aus einer CCD-Kamera besteht, läßt sich innerhalb der Bogenführung 37 so verschieben, daß es in der einen Stellung senkrecht oberhalb der Brillengestellöffnung 34 liegt, so daß seine optische Achse B mit der Drehachse A zusammenfällt. Das Video-Scanner-System 39 läßt sich des weiteren in der Bogenführung 37 verstellen, so daß seine optische Achse B einen Winkel α mit der Drehachse A bildet. Das Video-Scanner-System 39 läßt sich in der Bogenführung 37 mittels einer Feststellvorrichtung 38, z. B. Flügelschrauben, festsetzen. Die drehbare Halterung 36 ist mit einem Drehantrieb 40 versehen und mit einem Winkelgeber 41 verbunden. Sowohl das Video-Scanner-System 39 als auch der Winkelgeber 41 sind mit der Steuereinrichtung 12 verbunden, so daß sich ein Bild der Brillengestellöffnung 34 sowie der Querschnittsform der Facettennut 35 auf dem Bildschirm 15 darstellen läßt.

Einzelheiten des Aufnehmers und Auswerters der Facettennut 35 durch das Video-Scanner-System 39 sind in der DE 40 19 866 A1 derselben Anmelderin beschrieben. Nach dem Abtasten der Facettennut 35 und Eingabe der Meßdaten in die Steuereinrichtung 12 kann zunächst die entsprechende Brillenglasumfangskontur 32 eines in die Brillenglashaltewelle 5, 6 eingespannten Rohglases mit Hilfe der zylindrischen Vorschleifscheibe geschliffen werden. Der dabei auftretende Anpreßdruck ergibt sich aus der Einstellung der elektromagnetischen Kupplung 19 und ist unterschiedlich einstellbar für Brillengläser aus Kunststoff oder Silikatglas sowie entsprechend der von den optischen Werten des Brillenglas abhängigen Randdicke des Brillenglases. Das Brillenglas 9 wird mit seiner Welle 5, 6 in bekannter Weise in Drehung versetzt, wobei die Drehgeschwindigkeit üblicherweise 10 bis 13 U/min beträgt. Ein nicht dargestellter Winkelgeber übermittelt dem Rechner in der Steuereinrichtung 12 in gleichen Winkelabständen, z. B. in Inkrementen von je 6° einen Puls, wodurch die Steuereinrichtung 12 veranlaßt wird, den dazugehörigen, zu schleifenden Radius des Brillenglases 9 über den Antriebsmotor 18 einzustellen. Während des Schleifens der Umfangskontur 32 des Brillenglases 9 auf der Vorschleifscheibe werden das Schlittenteil 29 und damit die Schleifscheibe 3 in eine oszillierende Bewegung parallel zur Drehachse des Brillenglases 9 versetzt, die jeweils am Rand der Vorschleifscheibe in die entgegengesetzte Richtung umgesteuert wird. Diese Bewegung wird durch einen nicht dargestellten Antrieb für das Schlittenteil 29 gesteuert, der ebenfalls mit der Steuereinrichtung 12 in Verbindung steht. Dieser Antrieb des Schlittenteils 29 dient auch dazu, eine Facette durch Umsetzen des formgeschliffenen Brillenglases 9 in die Facettennut 11 entsprechend dem dreidimensionalen Verlauf der Facettennut 35 in der Brillenglasöffnung 34 des Brillengestells 42 an das umfangskonturgeschliffene Brillenglas 9 anzuschleifen, wobei dieser Verlauf der Facette mittels der Steuereinrichtung 12 steuerbar ist.

Nachdem mittels der Vorschleifscheibe die Brillenglasumfangskontur 32 entsprechend der Darstellung in Fig. 2 geschliffen wurde, wird das Brillenglas 9 automatisch auf die Fertigschleifscheibe mit der Facettennut 11 umgesetzt und diesbezüglich lagegenau positioniert. Das Brillenglas 9 weist für den Fertigschliff eine ausreichende Bearbeitungszugabe auf.

Bevor dieser Fertigschliff durchgeführt wird, wird die Facettennut 11 in der Fertigschleifscheibe mit der Facettennut 35 im Brillengestell 42 verglichen. Um diesen Vorgang zu verdeutlichen, ist in Fig. 4 ein von der CCD-Kamera 10 aufgenommener Abschnitt der Schleifscheibe 3 mit der Facettennut 11 in ausgezogenen Linien dargestellt, die einen Flankenwinkel ϕ₁ aufweist, der kleiner ist als der übliche Winkel einer Facettennut in einem Brillengestell. Diese Facettennut 11 mit dem Flankenwinkel ϕ₁ entspricht einer neuwertigen Schleifscheibe 3. Ein maßgenau konturgeschliffenes Brillenglas läßt sich daher problemlos in ein entsprechendes Brillengestell einsetzen und liegt mit der Spitze der Facette am Facettengrund des Brillengestells an.

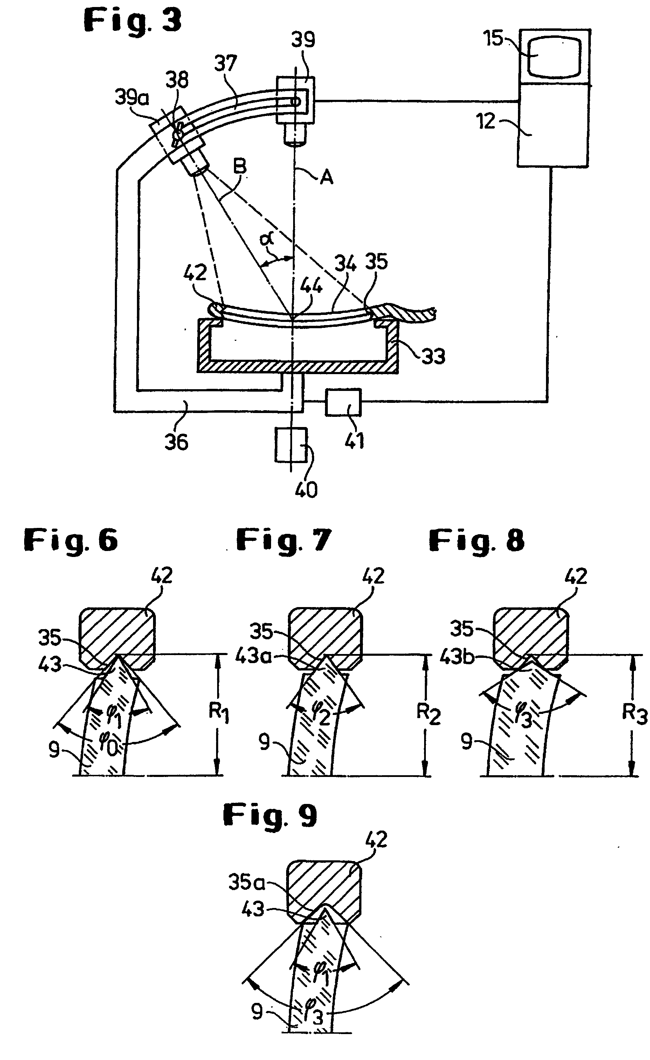

In Fig. 6 ist dieser Zustand mit Bezug auf eine Facettennut 35 in ein Brillengestell 42 dargestellt. Die Facettennut 35 weist einen Winkel ϕ₀ auf, der größer als der Winkel ϕ₁ der Facettennut 11 in der Fertigschleifscheibe 3 ist. Ein Radius R₁ des Brillenglases 9 ist in Fig. 4 und Fig. 6 eingezeichnet. Die Höhe der Facette 43, d. h. die Tiefe der Facettennut 11 in der Schleifscheibe 3 ist größer als die Tiefe der Facettennut 35 des Brillengestells 42.

In Fig. 5 ist ein Querschnitt durch ein Brillengestell 42 mit einer Facettennut 35 dargestellt, wie sie durch das Video-Scanner-System gemäß Fig. 3 aufgenommen wurde. Diese Facettennut 35 weist den Flankenwinkel ϕ₀ auf, der bereits mit Bezug auf Fig. 6 erwähnt wurde.

Im Laufe der Zeit nutzt sich die Facettennut in der Fertigschleifscheibe 3 ab und nimmt zunächst eine in Fig. 4 mit der Bezugsziffer 11a bezeichnete, gestrichelte Form an. Der Winkel dieser Facettennut einer abgenutzten Fertigschleifscheibe ist mit j₂ bezeichnet. Es ist erkennbar, daß gleichzeitig die Tiefe der Facettennut 11a um den Betrag D₁ zugenommen hat. Wird ein konturgeschliffenes Brillenglas 9 mit einer Facette 35, entsprechend Fig. 7, die den Winkel ϕ₂ aufweist, in die Facettennut 35 des Brillengestells 42 eingeführt, ist das Brillenglas 9 mit der Facette 43a um den Betrag Δ₁ zu groß und weist den Radius R₂ auf. Durch den Vergleich der Facettennut 35 im Brillengestell 42 mit der Facettennut 11a in der Fertigschleifscheibe 3 wird dieser Korrekturwert Δ₁ um den der Radius R₂ auf den Radius R₁ verkleinert werden muß, in der Steuereinrichtung 12 berücksichtigt, d. h. das Brillenglas 9 wird um den Betrag Δ₁ näher an die Schleifscheibe 3 mit der Facettennut 11 herangeführt, so daß die Facette 43a entsprechend den Maßen der Facettennut 35 im Brillengestell 42 geschliffen wird und sich in der in Fig. 7 dargestellten Weise, wenn die Winkel ϕ₀ und ϕ₂ übereinstimmen, in das Brillengestell 42 einpassen.

Ist die Fertigschleifscheibe 3 so weit abgenutzt, daß eine Facettennut 11b mit einem Winkel ϕ₃ erreicht ist, zu der eine Vergrößerung der Tiefe von Δ₂ gehört, läßt sich die hiermit geschliffene, abgeflachte Dachfacette 43b mit dem Winkel ϕ₃ nicht mehr vollständig in die Facettennut 35 des Brillengestells 42 einfügen, sondern liegt mit ihren Flanken, wie in Fig. 8 dargestellt, an den äußeren Kanten der Facettennut 35 an. In diesem Fall dringt die Facette 43b nicht vollständig in die Facettennut 35 des Brillengestells 42 ein und das Brillenglas 9 mit dieser Facette 43b erscheint größer als es tatsächlich ist. Der Rechner in der Steuereinrichtung 12 läßt sich indessen so programmieren, daß er die Facette 43b mit einem solchen Radius an das Brillenglas 9 anschleift, daß sich dieses Brillenglas noch in das Brillengestell 42 einsetzen läßt, wobei die Facettenspitze der Facette 43b jedoch nicht mehr den Grund der Facettennut 35 auf dem Brillengestell 42 erreicht. Der Flankenwinkel ϕ3 in Fig. 4 und Fig. 8 entspricht dem zulässigen Größtwert mit Bezug auf den Flankenwinkel ϕ₀ der Facettennut 35, wie sie in Fig. 5 dargestellt ist.

Wird dieser Winkel ϕ3 überschritten, ist die Schleifscheibe für Brillengestelle 42 mit einem Winkel ϕ₀ der Facettennut 35 nicht mehr geeignet. Weist indessen das Brillengestell 42 eine Facettennut 35a mit einem Flankenwinkel ϕ₃ auf, läßt sich die Schleifscheibe weiter verwenden, auch wenn die Facettennut 11b einen Flankenwinkel ϕ₃ oder mehr aufweist. Es ergibt sich somit, daß die Benutzbarkeit der Schleifscheibe mit Facettennut nicht aus einem Absolutwert des Flankenwinkels ϕ der Facettennut 11 folgt, sondern stets in Beziehung zum Flankenwinkel der Facettennut im Brillengestell gesetzt wird, woraufhin der Rechner in der Steuereinrichtung 12 eine Entscheidung trifft, ob der Facettenschliff mit den ermittelten Daten durchführbar ist, ob er mit einer Korrektur durchführbar ist oder ob er gar nicht durchführbar ist.

In Fig. 9 ist das Zusammentreffen einer Facettennut 35a mit dem Flankenwinkel ϕ₃ im Brillengestell 42 mit einer Facette 43 entsprechend der Facettennut 11 einer neuwertigen Schleifscheibe dargestellt. In diesem Fall ist die Facettennut 35a so tief, daß die Spitze der Facette 43 den Nutgrund nicht berührt, sondern die zylindrischen Bereiche des Brillenglases 9 seitlich von der Facette 43 auf den Rändern der Facettennut 35a aufliegen. Es ist ersichtlich, daß in einem solchen Fall ein Einsetzen des Brillenglases 9 in das Brillengestell 42 nicht möglich ist, da das Brillenglas in der Facettennut 35a nicht sicher gehalten ist.

Aufgrund des Vergleichs der mittels des Video-Scanner-Systems gemäß Fig. 3 aufgenommenen Facettennut 35a im Brillengestell 42 mit der mittels der CCD-Kamera 10 aufgenommenen Facettennut 11 in der Fertigschleifscheibe entscheidet die Steuereinrichtung vor dem Form- und Facettenschleifen des Brillenglases 9, daß die Bearbeitung nicht möglich ist und gibt ein entsprechendes Signal ab.

Es ergibt sich somit, daß die Facettenbearbeitung ohne Berücksichtigung eines Korrekturwertes nur dann durchgeführt wird, wenn die verglichenen Werte innerhalb eines vorgebbaren ersten Toleranzbereichs liegen, der einen Winkelbereich der Brillengestellfacettennut 35 umfaßt, der gleich oder größer als der Winkelbereich der Facettennut 11 des Brillenglasrandbearbeitungswerkzeugs 3 ist und einen Tiefenbereich der Brillengestellfacettennut 35 umfaßt, der gleich oder kleiner als der Tiefenbereich der Facettennut 11 des Brillenglasrandbearbeitungswerkzeugs 3 ist.

Die Facettenbearbeitung mit Einbeziehung eines Korrekturwertes wird nur durchgeführt, wenn die verglichenen Werte innerhalb eines zweiten Toleranzbereichs liegen, wobei der zweite Toleranzbereich einen Winkelbereich der Facettennut 35 des Brillengestells 42 umfaßt, der kleiner oder gleich dem Winkelbereich der Facettennut 11 des Brillenglasrandbearbeitungswerkzeugs 3 ist, wobei der Größtwert des Winkels der Facettennut 11 des Brillenglasrandbearbeitungswerkzeugs 3 einen vorgebbaren Wert nicht überschreiten darf und der radiale Korrekturwert aus der sich aus den Ist-Winkeln der Facettennuten 11, 35 des Brillenglasrandbearbeitungswerkzeugs 3 und des Brillengestells 42 errechenbaren Eindringtiefe der Facette 43 am formgeschliffenen Brillenglas 9 in die Facettennut 35 des Brillengestells 42 in der Weise bestimmt wird, daß das Brillenglas 9 um einen Radialwert Δ kleiner bearbeitet wird, der dem Abstand zwischen der Facettenspitze am Brillenglas 9 und dem Grund der Facettennut 35 des Brillengestells 42 entspricht. Ein weiterer radialer Korrekturwert wird noch berücksichtigt, wenn der Durchschnitt des Brillenglasrandbearbeitungswerkzeugs kleiner als ein vorgebbarer Mindestwert ist.

Demgegenüber wird die Facettenbearbeitung gar nicht erst durchgeführt, wenn sich ergibt, daß der Winkel und die Tiefe der Facettennut 35 des Brillengestells 42 größer als der Winkel und die Tiefe der Facettennut 11 des Brillenglasrandbearbeitungswerkzeugs 3 sind, oder wenn der Winkel der Facettennut 11 des Brillenglasrandbearbeitungswerkzeugs 3 größer als ein vorgebbarer Größtwert ist.

Dies bedeutet, daß das formgeschliffene und mit einer Facette 43 versehene Brillenglas 9 paßgenau in ein Brillengestell 42 stets dann einsetzbar ist, wenn die Steuereinrichtung 12 entscheidet, daß sich die Facettenbearbeitung durchführen läßt. Ein Korrekturschliff ist hierfür nicht erforderlich, da etwaig erforderliche Korrekturen von vornherein in das Rechnerprogramm zum Steuern des Schleifens des Brillenglases eingerechnet werden.

Das dargestellte und beschriebene Ausführungsbeispiel bezieht sich auf ein Video-Scanner-System mit CCD-Kamera, ist darauf jedoch nicht beschränkt, sondern kann auch ein Laser-Scanner-System umfassen.

## Patentansprüche

1. Verfahren zum Herstellen einer Facette auf dem Rand eines Brillenglases mittels einer CNC-gesteuerten Brillenglasrandbearbeitungsmaschine mit den Schritten:
- Abtasten der Facettennut einer Brillenglasöffnung in einem ausgewählten Brillengestell einschließlich der Querschnittsform und des Umfangs der Facettennut,
- Eingeben der ermittelten Werte in eine Steuereinrichtung der Brillenglasrandbearbeitungsmaschine,
- Abtasten des Brillenglasrandbearbeitungswerkzeugs hinsichtlich seines Durchmessers und der Form seiner Facettennut,
- Eingeben der ermittelten Werte in die Steuereinrichtung der Brillenglasrandbearbeitungsmaschine,
- Vergleichen der Werte der Querschnittsform der Facettennut des Brillengestells mit den Werten der Querschnittsform der Facettennut des Brillenglasrandbearbeitungswerkzeugs,
- Durchführen der Facettenbearbeitung mit den ermittelten Daten, wenn die verglichenen Werte der Querschnittsformen und der Durchmesser des Brillenglasrandbearbeitungswerkzeugs innerhalb eines vorgebbaren ersten Toleranzbereichs liegen,
- Durchführen der Facettenbearbeitung mit einem Korrekturwert, wenn die verglichenen Werte der Querschnittsformen innerhalb eines zweiten Toleranzbereichs liegen und/oder der Durchmesser des Brillenglasrandbearbeitungswerkzeugs kleiner als ein vorgebbarer Mindestwert ist,
- Nichtdurchführen der Facettenbearbeitung, wenn die verglichenen Werte der Querschnittsformen außerhalb des ersten und des zweiten Toleranzbereichs liegen.

2. Verfahren nach Anspruch 1, bei dem das Abtasten der Facettennuten im Brillengestell und in dem Brillenglasrandbearbeitungswerkzeug berührungslos mittels Video-Scanner-Systemen durchgeführt und die Querschnittsform der Facettennuten auf einem Bildschirm abgebildet wird.

3. Verfahren nach Anspruch 1, bei dem das Abtasten der Facettennuten im Brillengestell und in dem Brillenglasrandbearbeitungswerkzeug berührungslos mittels Laser-Scanner-Systemen durchgeführt und die Querschnittsform der Facettennuten auf einem Bildschirm abgebildet wird.

4. Verfahren nach Anspruch 1, 2 oder 3, bei dem der erste Toleranzbereich einen Winkelbereich der Brillengestellfacettennut umfaßt, der gleich oder größer als der Winkelbereich der Facettennut des Brillenglasrandbearbeitungswerkzeugs ist und einen Tiefenbereich der Brillengestellfacettennut umfaßt, der gleich oder kleiner als der Tiefenbereich der Facettennut des Brillenglasrandbearbeitungswerkzeugs ist.

5. Verfahren nach Anspruch 1, 2, 3 oder 4, bei dem der zweite Toleranzbereich einen Winkelbereich der Facettennut des Brillengestells umfaßt, der kleiner oder gleich dem Winkelbereich der Facettennut des Brillenglasrandbearbeitungswerkzeugs ist, wobei der Größtwert des Winkels der Facettennut des Brillenglasrandbearbeitungswerkzeugs einen vorgebbaren Wert nicht überschreiten darf und der Korrekturwert aus der sich aus den Ist-Winkeln der Facettennuten des Brillengestells und des Brillenglasrandbearbeitungswerkzeugs errechenbaren Eindringtiefe der Facette am formgeschliffenen Brillenglas in die Facettennut des Brillengestells in der Weise bestimmt wird, daß das Brillenglas um einen Radialwert kleiner bearbeitet wird, der dem Abstand zwischen der Facettenspitze am Brillenglas und dem Grund der Facettennut des Brillengestells entspricht.

6. Verfahren nach Anspruch 1, 2, 3, 4 oder 5, bei dem die Facettenbearbeitung nicht durchgeführt wird, wenn sich ergibt, daß der Winkel und die Tiefe der Facettennut des Brillengestells größer als der Winkel und die Tiefe der Facettennut des Brillenglasrandbearbeitungswerkzeugs sind, oder wenn der Winkel der Facettennut des Brillenglasrandbearbeitungswerkzeugs größer als ein vorgebbarer Größtwert ist.

7. Brillenglasrandbearbeitungsmaschine mit
- wenigstens einem Brillenglasrandbearbeitungswerkzeug (3) mit einer Facettennut (11),
- einer drehbaren, relativ zum Brillenglasrandbearbeitungswerkzeug (3) wenigstens radial verstellbaren Brillenglashaltewelle (5, 6),
- einer die Brillenglasrandbearbeitungsmaschine steuernden Steuereinrichtung (12),
- einer mit der Steuereinrichtung (12) verbundenen Vorrichtung (10) zum Abtasten des Brillenglasrandbearbeitungswerkzeugs (3) hinsichtlich seines Durchmessers und der Querschnittsform seiner Facettennut,
- einer mit der Steuereinrichtung (12) verbundenen Vorrichtung (39) zum Abtasten der Facettennut (35) einer Brillenglasöffnung (34) in einem ausgewählten Brillengestell (42) einschließlich der Querschnittsform,
- einer Vergleichseinrichtung in der Steuereinrichtung (12) zum Vergleichen der Werte der Querschnittsform der Facettennut (35) des Brillengestells (42) mit den Werten der Querschnittsform der Facettennut (11) des Brillenglasrandbearbeitungswerkzeugs (3) und
- Einrichtungen zum Steuern des Durchführens der Facettenbearbeitung mit den ermittelten Werten, wenn die verglichenen Werte innerhalb eines vorgebbaren ersten Toleranzbereichs, des Durchführens der Facettenbearbeitung mit einem Korrekturwert, wenn die verglichenen Werte innerhalb eines zweiten Toleranzbereichs liegen und/oder der Durchmesser des Brillenglasrandbearbeitungswerkzeugs kleiner als ein vorgebbarer Mindestwert ist, des Abbrechens der Facettenbearbeitung, wenn die verglichenen Werte außerhalb beider Toleranzbereiche liegen.

8. Brillenglasrandbearbeitungsmaschine nach Anspruch 7, bei der berührungslose Video-Scanner-Systeme (10; 39) zum Abtasten der Facettennut (11) im Brillenglasrandbearbeitungswerkzeug und der Facettennut (35) im Brillengestell (42) vorgesehen sind.

9. Brillenglasrandbearbeitungsmaschine nach Anspruch 8, bei der die Video-Scanner-Systeme (10; 39) CCD-Kameras umfassen.

10. Brillenglasrandschleifmaschine nach Anspruch 7, bei der berührungslose Laser-Scanner-Systeme (10; 39) zum Abtasten der Facettennut (11) im Brillenglasrandbearbeitungswerkzeug und der Facettennut (35) im Brillengestell (42) vorgesehen sind.

11. Brillenglasrandbearbeitungsmaschine nach Anspruch 6, 7 oder 8, bei der die Steuereinrichtung (12) einen Bildschirm (15) umfaßt, auf dem über ein Bildauswertesystem die Facettennut (11) des Brillenglasrandbearbeitungswerkzeug (3) und die Facettennut (35) des Brillengestells (42) abgebildet werden.

12. Brillenglasrandbearbeitungsmaschine nach Anspruch 9, bei der die Steuereinrichtung (12) ein Bildauswertesystem umfaßt, mit dem sich auf dem Bildschirm (15) die Facettennut (35) des Brillengestells und darin eingefügt eine Facette (43) eines Brillenglases (9), entsprechend der Facettennut (11) des Brillenglasrandbearbeitungswerkzeugs (3) abbilden lassen.

## Claims

1. A method for producing a facet on the edge of a spectacle lens by means of a CNC spectacle-lens edge machining machine, comprising the steps:
- scanning the facet groove of a lens opening in a selected spectacle frame including the cross-sectional form and the periphery of the facet groove,
- entering the values obtained into a control means for the spectacle-lens edge machining machine,
- scanning the spectacle-lens edge machining tool with regard to its diameter and the form of its facet groove,
- entering the values obtained into the control means for the spectacle-lens edge machining machine,
- comparing the values of the cross-sectional form of the facet groove of the spectacle frame with the values of the cross-sectional form of the facet groove of the spectacle-lens edge machining tool,
- performing the facet machining with the data obtained if the compared values of the cross-sectional forms and the diameters of the spectacle-lens edge machining tool lie within a pre-settable first tolerance range,
- performing the facet machining with a correction value if the compared values of the cross-sectional forms lie within a second tolerance range and/or the diameters of the spectacle-lens edge machining tool are smaller than a pre-settable minimum value,
- not performing the facet machining if the compared values of the cross-sectional forms lie outside the first and second tolerance ranges.

2. A method according to Claim 1, in which the scanning of the facet grooves in the spectacle frame and in the spectacle-lens edge machining tool is performed in non-contacting manner by means of video scanner systems and the cross-sectional form of the facet grooves is imaged on a screen.

3. A method according to Claim 1, in which the scanning of the facet grooves in the spectacle frame and in the spectacle-lens edge machining tool is performed in non-contacting manner by means of laser scanner systems and the cross-sectional form of the facet grooves is imaged on a screen.

4. A method according to Claim 1, 2 or 3, in which the first tolerance range comprises an angular range of the spectacle-frame facet groove which is equal to or greater than the angular range of the facet groove of the spectacle-lens edge machining tool and comprises a depth range of the spectacle-frame facet groove which is equal to or less than the depth range of the facet groove of the spectacle-lens edge machining tool.

5. A method according to Claim 1, 2, 3 or 4, in which the second tolerance range comprises an angular range of the facet groove of the spectacle frame which is less than or equal to the angular range of the facet groove of the spectacle-lens edge machining tool, wherein the maximum value of the angle of the facet groove of the spectacle-lens edge machining tool must not exceed a pre-settable value and the correction value is determined from the depth of penetration of the facet on the form-ground lens into the facet groove of the spectacle frame, which can be calculated from the actual angles of the facet grooves of the spectacle frame and of the spectacle-lens edge machining tool, in such a way that the lens is machined smaller by a radial value which corresponds to the distance between the facet tip on the lens and the bottom of the facet groove of the spectacle frame.

6. A method according to Claim 1, 2, 3, 4 or 5, in which the facet machining is not performed if the angle and the depth of the facet groove of the spectacle frame are larger than the angle and the depth of the facet groove of the spectacle-lens edge machining tool, or if the angle of the facet groove of the spectacle-lens edge machining tool is greater than a pre-settable maximum value.

7. A spectacle-lens edge machining machine, comprising:
- at least one spectacle-lens edge machining tool (3) with a facet groove (11),
- a rotatable lens holding shaft (5, 6), adjustable at least radially relative to the spectacle-lens edge machining tool (3),
- a control means (12) controlling the spectacle-lens edge machining machine,
- a device (10), connected to the control means (12), for scanning the spectacle-lens edge machining tool (3) with regard to its diameter and the cross-sectional form of its facet groove,
- a device (39), connected to the control means (12), for scanning the facet groove (35) of a lens opening (34) in a selected spectacle frame (42) including the cross-sectional form,
- a comparison means in the control means (12) for comparing the values of the cross-sectional form of the facet groove (35) of the spectacle frame (42) with the values of the cross-sectional form of the facet groove (11) of the spectacle-lens edge machining tool (3) and
- means for controlling the performance of the facet machining with the values obtained if the compared values lie within a pre-settable first tolerance range, the performance of the facet machining with a correction value if the compared values lie within a second tolerance range and/or the diameter of the spectacle-lens edge machining tool is less than a pre-settable minimum value, the breaking-off of the facet machining if the compared values lie outside both tolerance ranges.

8. A spectacle-lens edge machining machine according to Claim 7, in which the non-contacting video scanner systems (10; 39) are provided for scanning the facet groove (11) in the spectacle-lens edge machining tool and the facet groove (35) in the spectacle frame (42).

9. A spectacle-lens edge machining machine according to Claim 8, in which the video scanner systems (10; 39) comprise CCD cameras.

10. A spectacle-lens edge grinding machine [sic] according to Claim 7, in which non-contacting laser scanner systems (10; 39) are provided for scanning the facet groove (11) in the spectacle-lens edge machining tool and the facet groove (35) in the spectacle frame (42).

11. A spectacle-lens edge machining machine according to Claim 6, 7 or 8, in which the control means (12) comprises a screen (15) on which the facet groove (11) of the spectacle-lens edge machining tool (3) and the facet groove (35) of the spectacle frame (42) are imaged via an image evaluation system.

12. A spectacle-lens edge machining machine according to Claim 9, in which the control means (12) comprises an image evaluation system with which the facet groove (35) of the spectacle frame and, inserted therein, a facet (43) of a lens (9) corresponding to the facet groove (11) of the spectacle-lens edge machining tool (3) can be imaged on the screen (15).

## Revendications

1. Procédé pour réaliser une facette sur le bord d'un verre de lunettes au moyen d'une machine d'usinage du bord d'un verre de lunettes à commande numérique comportant les étapes suivantes :
- palpage de la rainure de facette d'une ouverture de verre de lunettes dans une monture de lunettes sélectionnée, y compris de la forme de la section transversale et du pourtour de la rainure de facette,
- introduction des valeurs déterminées dans un dispositif de commande de la machine d'usinage du bord d'un verre de lunettes,
- palpage de l'outil d'usinage du bord d'un verre de lunettes en ce qui concerne son diamètre et la forme de sa rainure de facette,
- introduction des valeurs déterminées dans le dispositif de commande de la machine d'usinage du bord d'un verre de lunettes,
- comparaison des valeurs de la forme de la section transversale de la rainure de facette de la monture de lunettes, avec les valeurs de la forme de la section transversale de la rainure de facette de l'outil d'usinage du bord d'un verre de lunettes,
- exécution de l'usinage de la facette avec les données déterminées si les valeurs comparées des formes de la section transversale et des diamètres de l'outil d'usinage du bord d'un verre de lunettes se situent à l'intérieur d'une première plage de tolérances à prescrire,
- exécution de l'usinage de la facette avec une valeur de correction si les valeurs comparées des formes de la section transversale se situent à l'intérieur d'une deuxième plage de tolérances et/ou si le diamètre de l'outil d'usinage du bord d'un verre de lunettes est inférieur à une valeur minimale à prescrire,
- non-exécution de l'usinage de la facette si les valeurs comparées des formes de la section transversale se situent en dehors de la première et de la deuxième plage de tolérances.

2. Procédé selon la revendication 1, dans lequel le palpage des rainures de facette est exécuté dans la monture de lunettes et dans l'outil d'usinage du bord d'un verre de lunettes sans contact, au moyen de systèmes scanner vidéo, et la forme de la section transversale des rainures de facette est reproduite sur un écran.

3. Procédé selon la revendication 1, dans lequel le palpage des rainures de facette dans la monture de lunettes et dans l'outil d'usinage d'un bord de verre de lunettes est exécuté sans contact au moyen de systèmes scanner à laser et la forme de la section transversale des rainures de facette est reproduite sur un écran.

4. Procédé selon la revendication 1, 2 ou 3, dans lequel la première plage de tolérances comprend une plage angulaire de la rainure de facette de la monture de lunettes, qui est égale ou supérieure à la plage angulaire de la rainure de facette de l'outil d'usinage du bord d'un verre de lunettes, et comprend une plage de profondeur de la rainure de facette de la monture de lunettes qui est égale ou inférieure à la plage de profondeur de la rainure de facette de l'outil d'usinage du bord d'un verre de lunettes.

5. Procédé selon la revendication 1, 2, 3 ou 4 dans lequel la deuxième plage de tolérances comprend une plage angulaire de la rainure de facette de la monture de lunettes, qui est inférieure ou égale à la plage angulaire de la rainure de facette de l'outil d'usinage du bord d'un verre de lunettes, la valeur maximale de l'angle de la rainure de facette de l'outil d'usinage du bord d'un verre de lunettes ne devant pas dépasser une valeur à prescrire, et la valeur de correction étant déterminée à partir de la profondeur de pénétration, qui peut être calculée à partir des angles réels des rainures de facette de la monture de lunettes et de l'outil d'usinage du bord d'un verre de lunettes, de la facette sur le verre de lunettes meulé à la forme, dans la rainure de facette de la monture de lunettes, de manière que le verre de lunettes soit usiné plus petit d'une valeur radiale qui correspond à la distance entre le sommet de la facette sur le verre de lunettes et le fond de la rainure de facette de la monture de lunettes.

6. Procédé selon la revendication 1, 2, 3, 4 ou 5, dans lequel l'usinage de la facette n'est pas exécuté si l'angle et la profondeur de la rainure de facette de la monture de lunettes sont supérieurs à l'angle et à la profondeur de la rainure de facette de l'outil d'usinage du bord d'un verre de lunettes ou si l'angle de la rainure de facette de l'outil d'usinage du bord d'un verre de lunettes est supérieur à une valeur maximale à prescrire.

7. Machine d'usinage du bord d'un verre de lunettes comportant
- au moins un outil d'usinage (3) du bord d'un verre de lunettes avec une rainure de facette (11),
- un arbre de maintien (5, 6) du verre de lunettes qui peut tourner et qui peut être réglé au moins radialement par rapport à l'outil d'usinage (3) du bord d'un verre de lunettes,
- un dispositif de commande (12) commandant la machine d'usinage du bord d'un verre de lunettes,
- un dispositif (10) relié au dispositif de commande (12) pour palper l'outil d'usinage (3) du bord d'un verre de lunettes en ce qui concerne son diamètre et la forme de la section transversale de sa rainure de facette,
- un dispositif (39) relié au dispositif de commande (12) pour palper la rainure de facette (35) d'une ouverture (34) d'un verre de lunettes dans une monture de lunettes (42) sélectionnée, ainsi que la forme de la section transversale,
- un dispositif de comparaison dans le dispositif de commande (12) pour comparer les valeurs de la forme de la section transversale de la rainure de facette (35) de la monture de lunettes (42) avec les valeurs de la forme de la section transversale de la rainure de facette (11) de l'outil d'usinage (3) du bord d'un verre de lunettes, et
- des dispositifs pour commander l'exécution de l'usinage de la facette avec les valeurs déterminées, si les valeurs comparées se situent à l'intérieur d'une première plage de tolérances à prescrire, l'exécution de l'usinage de la facette avec une valeur de correction si des valeurs comparées se situent à l'intérieur d'une deuxième plage de tolérances et/ou lorsque le diamètre de l'outil d'usinage du bord d'un verre de lunettes est inférieur à une valeur minimale à prescrire, l'interruption de l'usinage de la facette si les valeurs comparées se situent en dehors des deux plages de tolérances.

8. Machine d'usinage du bord d'un verre de lunettes selon la revendication 7, dans laquelle sont prévus des systèmes de scanner vidéo (10 ; 39) pour le palpage sans contact de la rainure de facette (11) dans l'outil d'usinage du bord d'un verre de lunettes et de la rainure de facette (35) dans la monture de lunettes (42).

9. Machine d'usinage du bord d'un verre de lunettes selon la revendication 8, dans laquelle les systèmes de scanner vidéo (10; 39) comprennent des caméras CCD.

10. Machine à meuler le bord d'un verre de lunettes selon la revendication 7, dans laquelle sont prévus des systèmes de scanner à laser (10 ; 39) pour le palpage sans contact de la rainure de facette (11) dans l'outil d'usinage du bord d'un verre de lunettes et de la rainure de facette (35) dans la monture de lunettes (42).

11. Machine d'usinage du bord d'un verre de lunettes selon la revendication 6, 7 ou 8, dans laquelle le dispositif de commande (12) comprend un écran (15) sur lequel sont reproduites, à travers un système d'interprétation d'images, la rainure de facette (11) de l'outil d'usinage (3) du bord d'un verre de lunettes et la rainure de facette (35) de la monture de lunettes (42).

12. Machine d'usinage du bord d'un verre de lunettes selon la revendication 9, dans laquelle le dispositif de commande (12) comprend un système d'interprétation d'images au moyen duquel on peut reproduire sur l'écran (15) la rainure de facette (35) de la monture de lunettes et, insérée dans celle-ci, une facette (43) d'un verre de lunettes (9), conformément à la rainure de facette (11) de l'outil d'usinage (3) du bord d'un verre de lunettes.
